# DEMANDE DE BREVET EUROPEEN

(11) **EP 1 855 027 A1**
(43) Date de publication de la demande: **14.11.2007**
(21) Numéro de dépôt: 07300990.4
(22) Date de dépôt: 26.04.2007
(51) Int. Cl.: F16H 3/089, F16H 3/54

(54) **Système mécanique de transmission d'une puissance motrice à plusieurs vitesses de rotation de sortie, et motoréducteur utilisant au moins un tel système**

(30) Priorité: 12.05.2006 FR 0651710
(71) Demandeur: PEUGEOT CITROËN AUTOMOBILES S.A., 78140 Velizy Villacoublay (FR)
(72) Inventeur: Poinsignon, Jean-Marc, 57220 Fouligny (FR)
(74) Mandataire: Vigand, Régis Louis Michel

(57) **Abrégé**

- Le système comprend un arbre d'entrée (10) par lequel la puissance motrice est amenée, un arbre de sortie (11) auquel tout ou partie de la puissance motrice est transmise, et un mécanisme de transmission du mouvement entre l'arbre d'entrée (10) et l'arbre de sortie (11),
- Ce mécanisme de transmission du mouvement est un mécanisme d'engrenage, qui présente plusieurs rapports de réduction possibles, de façon à obtenir des vitesses de rotation différentes dudit arbre de sortie (11), et il est prévu un moyen de commutation (20,21) pour passer d'une desdites vitesses de rotation à une autre.

## Description

La présente invention concerne un système mécanique de transmission d'une puissance motrice à plusieurs vitesses de rotation de sortie. Elle concerne également un motoréducteur utilisant au moins un tel système mécanique de transmission.

La présente invention s'applique, par exemple, dans le domaine de la commande d'équipements automobiles réglables.

De plus en plus de fonctions dans un véhicule automobile sont commandées par le conducteur, un passager ou un ordinateur de bord, et comprennent des moyens de transmission des commandes vers des moyens motorisés d'actionneurs destinés à exécuter les commandes. Il en est ainsi des nombreux réglages différents des sièges, de la climatisation, de l'ouverture du coffre du véhicule, du fonctionnement des lave-glaces, etc.

Le Demandeur a déjà mis au point et réalisé des moyens actionneurs permettant de faire varier de nombreuses fonctions d'une pièce d'équipement automobile réglable.

Ainsi, il a mis au point et réalisé un motoréducteur destiné à répartir une puissance motrice entre au moins deux sorties. Ce motoréducteur comprend un axe d'entrée par lequel la puissance motrice est amenée, au moins deux axes de sortie auxquels des parties ou la totalité de la puissance motrice sont disponibles, et au moins un embrayage électronique destiné à établir ou à défaire, sur commande, la transmission d'une partie ou de la totalité de la puissance motrice vers une sortie.

De cette façon, à partir d'un seul actionneur, un couple moteur peut être transmis vers plusieurs sorties.

Dans un tel système, la vitesse de rotation de la sortie active est déterminée par un rapport de réduction à la vitesse de rotation de l'actionneur. Ce rapport est fixe et il est fonction de la chaîne mécanique reliant l'actionneur à la sortie active, de rapports de nombres de dents, par exemple, dans le cas d'une transmission par engrenage.

Il est des cas de fonctions d'équipements automobiles pour lesquelles il apparaît de plus en plus souhaitable de pouvoir commander une sortie à deux vitesses de rotation différentes possibles. A titre d'exemple, pour illustrer cette tendance, on mentionnera la fonction de déplacement du siège avant sur la glissière associée d'un véhicule automobile à trois portes. Dans un tel type de véhicule, l'accès aux places arrière nécessite l'avancement du siège avant. Cet avancement du siège avant est avantageusement réalisé de manière rapide, tandis que le réglage du siège en position sur sa glissière effectué par le conducteur doit être un mouvement plus lent. On comprend ainsi qu'il y a un besoin pour un système de transmission mécanique à deux vitesses de rotation de sortie possibles, et ce besoin est dicté par un souci de confort, élément majeur de l'appréciation que le client fait du véhicule.

Selon la publication de demande de brevet d'invention des Etats-Unis d'Amérique US 2003/0089348 A1, on connaît un compresseur pour moteur à combustion interne, qui comprend une pompe entraînée par le moteur par l'intermédiaire d'une boîte de transmission à engrenages. La boîte de transmission comporte deux trains épicycloïdaux et un embrayage manoeuvrable. Un dispositif de commande provoque, de manière sélective, l'activation de l'embrayage pour commander la transition entre les deux vitesses de façon à garantir une transition « douce », sans « à-coups » dans le couple de sortie.

Ce système d'entraînement de compresseur à deux vitesses de sortie, selon l'art antérieur, est un système avec un rapport d'entraînement variable, sans saccades, qui permet d'améliorer le couple du moteur aux faibles vitesses.

Mais un telle solution de l'art antérieur ne vise pas et ne s'applique pas à la réalisation d'une sortie à deux vitesses de rotation possibles dans le cadre d'un moteur réducteur à embrayage électromagnétique à plusieurs sorties à partir d'un actionneur unique.

Un premier but de la présente invention est de réaliser un système mécanique de transmission d'une puissance motrice à plusieurs vitesses de rotation de sortie, applicable à la commande d'équipements automobiles réglables, de conception simple et de montage facile, d'encombrement réduit, fiable, et de moindre coût.

Un autre but de la présente invention est de réaliser un tel nouveau système mécanique de transmission, dans lequel le passage d'une vitesse de rotation de sortie à une autre puisse être effectué de manière simple, fiable, et en particulier sans aucun déplacement d'engrenage.

Un autre but de la présente invention est de réaliser un nouveau moteur réducteur, dans lequel au moins une sortie offre la possibilité de deux vitesses de rotation différentes sans qu'il soit nécessaire d'ajouter de nombreux composants supplémentaires aux moteurs réducteurs existants.

Pour parvenir à ces buts, la présente invention fournit un nouveau système mécanique de transmission, du type comprenant un axe d'entrée par lequel la puissance motrice est amenée, un axe de sortie auquel tout ou partie de la puissance motrice est transmise, et un mécanisme de transmission du mouvement entre l'axe d'entrée et l'axe de sortie. Dans ce nouveau système mécanique de transmission, le mécanisme de transmission est un mécanisme d'engrenage à plusieurs rapports de réduction possibles, de façon à obtenir plusieurs vitesses de rotation possibles différentes de l'axe de sortie, et il est prévu un moyen de commutation pour passer d'une vitesse de rotation à une autre.

En particulier, l'invention fournit un système mécanique de transmission de ce type, dans lequel le mécanisme de transmission du mouvement présente deux rapports de réduction possibles, de façon à offrir la possibilité de deux vitesses de rotation différentes de l'axe de sortie.

Selon une caractéristique avantageuse de l'invention, le moyen de commutation d'une vitesse de rotation à une autre s'exerce sans déplacement d'engrenage.

De préférence, le moyen de commutation est constitué par des embrayages électromagnétiques, en nombre égal au nombre de vitesses de rotation possibles différentes.

Selon un premier mode de réalisation de l'invention, ledit mécanisme de transmission est un mécanisme de type train épicycloïdal.

Et, dans ce mode de réalisation, les embrayages sont situés de part et d'autre du porte satellites du train épicycloïdal, de façon à bloquer la rotation des satellites, soit par rapport à un point fixe, soit par rapport au planétaire central, de façon à obtenir deux vitesses de rotation différentes possibles de l'axe de sortie.

Selon un second mode de réalisation de l'invention, ledit mécanisme de transmission est de type à deux engrenages, chaque engrenage, c'est-à-dire chaque ensemble de deux roues dentées, ayant un rapport de réduction différent et comprenant une roue dentée montée sur l'arbre moteur et une roue dentée montée sur l'axe de sortie.

Et, dans ce second mode de réalisation, il est prévu deux embrayages, chaque embrayage étant associé à un engrenage et ayant pour fonction d'établir ou défaire la transmission mécanique dudit engrenage avec l'axe de sortie.

Dans les deux modes de réalisation, de préférence, les embrayages sont placés de telle manière que l'activation simultanée des deux embrayages permet de bloquer la rotation de l'axe de sortie du système.

L'invention réalise également un nouveau moteur réducteur à au moins une sortie. Ce nouveau moteur réducteur ou motoréducteur comprend un axe d'entrée par lequel la puissance motrice est amenée, au moins un axe de sortie à laquelle une partie ou la totalité de la puissance motrice est disponible, au moins un embrayage électromagnétique destiné à établir ou à défaire, sur commande, la transmission d'une partie ou de la totalité de la puissance motrice vers une sortie, l'une au moins des sorties étant une sortie à au moins deux vitesses de rotation différentes reliée à l'axe d'entrée par un système mécanique de transmission conforme à l'enseignement de la présente invention.

D'autres buts, avantages et caractéristiques de l'invention apparaîtront dans la description qui suit d'un mode de réalisation préféré, non limitatif de l'objet et de la portée de la présente demande de brevet, accompagnée de dessins dans lesquels :
- les figures 1A et 1B représentent respectivement la chaîne cinématique (1A) et une illustration en perspective du principe de fonctionnement (1B) du système mécanique de transmission selon un premier mode de réalisation de la présente invention, et
- les figures 2A et 2B représentent respectivement la chaîne cinématique (2A) et une illustration en perspective du principe de fonctionnement (2B) du système mécanique de transmission selon un second mode de réalisation de la présente invention.
- la figure 2C est une vue élargie du montage d'embrayage associé au premier engrenage, selon le mode de réalisation des figures 2A et 2B.

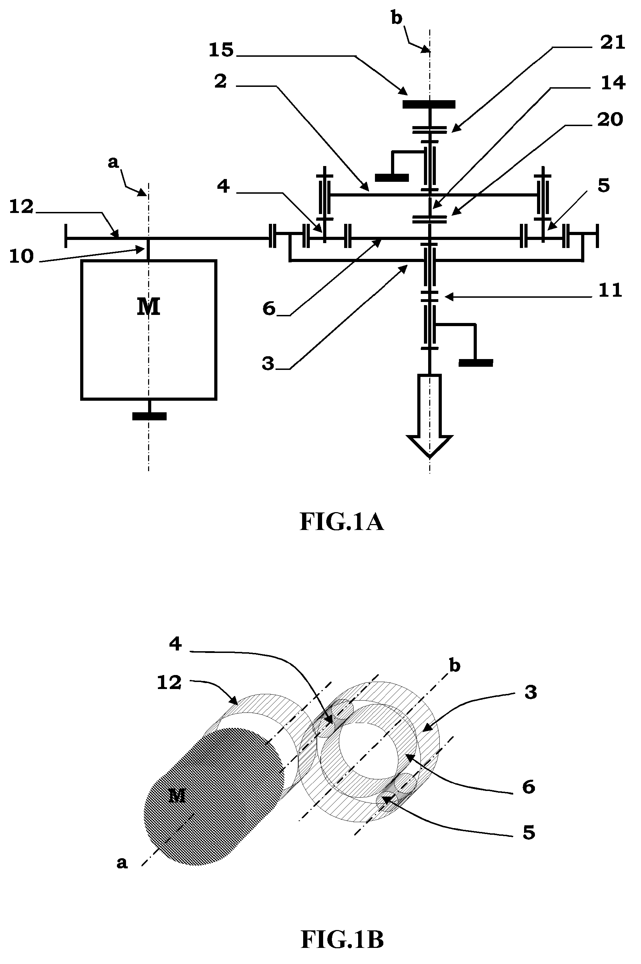

En se référant au dessin des figures 1A et 1B, il est représenté, de manière schématique, un premier mode de réalisation du système mécanique de transmission selon la présente invention.

Un moteur M délivre, sur son arbre de sortie 10 d'axe référencé « a », une puissance mécanique destinée à être transmise à une sortie représentée par un arbre 11, par l'intermédiaire d'une roue dentée 12, montée solidaire de l'arbre 10, et d'un mécanisme de transmission qui engrène avec la roue dentée 12 et transmet un couple mécanique à l'arbre de sortie 11.

Le mécanisme de transmission est un mécanisme de type train épicycloïdal. Il comporte une couronne 3 à denture externe et à denture interne, des satellites 4 et 5, un planétaire central 6 solidaire de l'arbre de sortie 11, un porte satellites 2 monté sur un arbre 14. L'arbre 14 est de même axe référencé « b » que l'arbre de sortie 11.

Le mécanisme de transmission comporte, de plus, deux embrayages. Le premier embrayage 20 permet de solidariser en rotation - ou désolidariser - l'arbre de sortie 11 et l'arbre 14 du porte satellites 2. Le second embrayage 21 est destiné à solidariser - ou désolidariser - l'arbre 14 du porte satellites 2 avec un élément mécanique fixe, schématiquement représenté en 15, par conséquent à maintenir immobile en rotation - ou libre en rotation - le porte satellites 2.

Le fonctionnement du mécanisme de transmission est le suivant.

Si l'embrayage 21 est en position de couplage (embrayage) et l'embrayage 20 en position découplée (désembrayage), le porte satellite 2 est immobilisé en rotation. Le couple moteur généré par le moteur M est communiqué à la roue dentée 12 par l'intermédiaire de l'arbre moteur 10. La rotation de la roue 12 entraîne la rotation de la couronne 3 en engrenage (par sa denture externe) avec la roue motrice 12. Par sa denture interne, la couronne 3 entraîne les satellites 4 et 5 en rotation autour de leur axe mais ces satellites ne tournent pas autour de l'axe b puisque le porte satellites 2 est immobilisé en rotation. Le mouvement de rotation sur eux-mêmes des satellites 4 et 5 est communiqué au planétaire 6, et par conséquent à l'arbre de sortie 11, avec une vitesse angulaire w₁.

Si l'embrayage 20 est en position de couplage (embrayage) et l'embrayage 21 en position découplée (désembrayage), le porte satellites 2 n'est plus immobilisé en rotation, il est entraîné en rotation par la rotation autour de son arbre 14 des satellites 4 et 5, lesquels tournent sur eux-mêmes autour de leur axe propre et autour de l'arbre 14 d'axe b du porte satellites 2. L'embrayage 20 solidarisant en rotation les arbres 14 et 11, l'arbre de sortie 11 du système tourne avec une vitesse angulaire w₂.

Dans le premier cas (w₁), la rotation des satellites 4 et 5 autour de l'axe b du porte satellite 2 est bloquée par rapport à un point fixe, au châssis par exemple. Dans le second cas (w₂), la rotation des satellites 4 et 5 est bloquée par rapport au planétaire 6.

La vitesse angulaire w₂ est différente de la vitesse angulaire w₁. Elle est plus petite que w₁, du fait de la grande démultiplication dans ce cas.

Le système de transmission décrit ci-dessus combine une solution mécanique d'offre de deux vitesses différentes associée à une solution électromagnétique de sélection d'une vitesse et de passage d'une vitesse à l'autre.

On notera que le couplage simultané des deux embrayages 20 et 21 bloque la rotation de tout le mécanisme de transmission, ce qui a pour résultat de fournir un mécanisme de freinage du système de transmission.

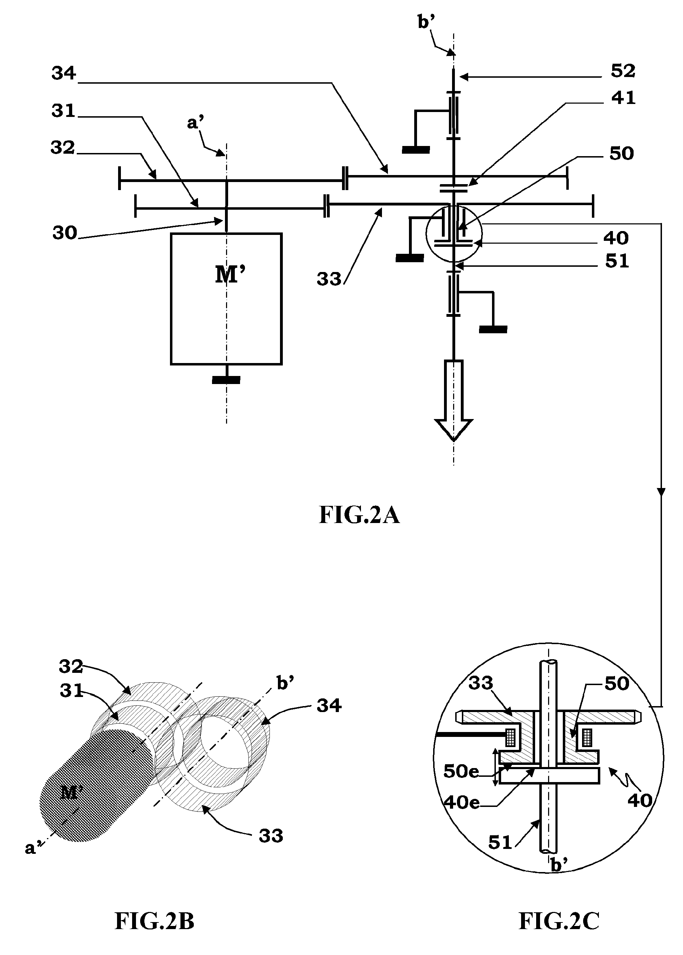

On a représenté sur les figures 2A à 2C une variante de réalisation de la présente invention.

Un moteur M' délivre, sur son arbre moteur 30 d'axe référencé « a' », une puissance mécanique destinée à être transmise à une sortie représentée par un arbre 51, d'axe « b' », par l'intermédiaire d'un mécanisme de transmission décrit ci-après.

Ce mécanisme de transmission, comme le mécanisme de transmission des figures 1A et 1B, permet d'obtenir deux vitesses différentes de la sortie d'arbre 51. Le mécanisme de transmission est un mécanisme à engrenage double : un premier engrenage composé des deux roues dentées 31 et 33, montées sur l'arbre moteur 30 et l'axe de sortie d'axe b', respectivement, et un second engrenage composé des deux roues dentées 32 et 34, montées sur l'arbre moteur 30 et la sortie d'axe b', respectivement. Le premier engrenage (31, 33) et le second engrenage (32, 34) présentent des rapports de réduction différents par les diamètres et les nombres de dents respectifs des roues dentées constitutives, de manière à obtenir des vitesses angulaires (w'₁, w'₂) différentes. Les roues dentées 31 et 32 sont solidaires en rotation de l'arbre moteur 30, tandis que les roues dentées 33 et 34 sont libres en rotation autour de l'axe b' mais peuvent être solidarisées avec l'arbre de sortie 51 grâce à deux embrayages 40 et 41, et selon les moyens mécaniques décrits ci-dessous. La roue dentée 33 est montée indirectement et libre sur l'arbre 51 par l'intermédiaire d'un manchon 50, solidaire de la roue 33, ou monté monobloc avec celle-ci. L'embrayage 40 est destiné à coupler le manchon 50 avec l'arbre de sortie 51, et par conséquent la roue 33 avec l'arbre de sortie 51, l'embrayage 41 étant en position de découplage. L'embrayage 41 est destiné à coupler directement la roue réceptrice 34 du second engrenage avec l'arbre de sortie 51, l'embrayage 40 étant en position de découplage et la roue 33 tournant librement sur son axe sans entraîner l'arbre 51.

On a représenté plus en détails l'embrayage 40 sur le dessin de la figure 2C. Le manchon 50, solidaire de la roue 33, comporte une surface 50e qui forme une surface d'une première platine d'embrayage et est destinée à entraîner par friction une seconde platine d'embrayage, de surface de friction 40e, solidaire de l'arbre 51. En l'absence de pression des surfaces 50e et 40e l'une contre l'autre, elles sont distantes l'une de l'autre, désolidarisant ainsi la roue 33 de l'arbre 51. La roue 33 est montée libre en rotation sur l'arbre 51, et dans un palier non référencé.

Le fonctionnement du mécanisme de transmission des figures 2A à 2C est le suivant.

Si l'embrayage 40 est en position de couplage et l'embrayage 41 en position de découplage, la roue dentée 31 entraîne la roue dentée 33 et, par conséquent, le manchon 50, monté fixe ou monobloc avec la roue 33. Le manchon 50 est solidarisé en rotation avec l'arbre 51 par l'embrayage 40 en position de couplage. L'arbre 51 est entraîné en rotation avec une vitesse angulaire w'₁, liée à la vitesse angulaire de l'arbre moteur 30 par un premier rapport de réduction à l'image des diamètres et nombres de dents respectifs des roues 31 et 33 du premier engrenage. L'embrayage 41 étant en position de découplage, l'arbre 52 est désolidarisé de l'arbre coaxial 51.

Si l'embrayage 41 est en position de couplage et l'embrayage 40 en position de découplage, la roue dentée 32 du second engrenage entraîne en rotation la roue 34, laquelle provoque la rotation de l'arbre de sortie 51 par l'intermédiaire de l'embrayage 41 en position de couplage, c'est-à-dire solidarisant directement l'axe de la roue 34, c'est-à-dire l'arbre 52, avec l'arbre de sortie 51. Dans cette configuration, l'embrayage 40 étant en position de découplage, le manchon 50 est désolidarisé de l'arbre 51, par conséquent la roue 33, solidaire du manchon 50, est désolidarisée de l'arbre 51. L'arbre 51 est entraîné en rotation avec une vitesse angulaire w'₂, liée à la vitesse angulaire de l'arbre moteur 30 par un second rapport de réduction à l'image des diamètres et nombres de dents respectifs des roues 32 et 34 du second engrenage.

Ainsi, les embrayages 40 et 41 permettent de coupler individuellement l'un ou l'autre engrenage avec l'arbre de sortie 51. Les engrenages présentant des rapports de réduction différents, l'activation individuelle de l'un et de l'autre embrayage permet d'obtenir deux vitesses différentes de l'arbre de sortie 51.

On notera que, comme dans le premier mode de réalisation précédemment décrit, le couplage simultané des deux embrayages 40 et 41 bloque la rotation de tout le mécanisme de transmission, ce qui a pour résultat de fournir un mécanisme de freinage du système de transmission.

On notera également que le mode de réalisation des figures 2A à 2C constitue un mode de réalisation avantageux par le nombre minimal de composants mécaniques qu'il comporte, par le nombre minimal d'ajustements qu'il implique en fabrication, et par conséquent, par le coût qu'il entraîne.

Ce second mode de réalisation permet, plus encore que le premier mode de réalisation, de réaliser un nombre plus grand de prestations avec un nombre minimal de composants.

Lé présente invention permet de réaliser un nouveau moteur réducteur à embrayages.

Un moteur réducteur est destiné à répartir une puissance motrice entre au moins deux sorties. Il comprend, de manière connue en soi, un axe d'entrée par lequel la puissance motrice est amenée, au moins deux axes de sortie auxquels des parties ou la totalité de la puissance motrice sont disponibles, au moins un embrayage électromagnétique destiné à établir ou à défaire, sur commande, la transmission d'une partie ou de la totalité de la puissance motrice vers une sortie.

Selon un autre aspect de la présente invention, un tel moteur réducteur comprend au moins un système mécanique de transmission tel que décrit ci-dessus. On obtient de cette façon deux sorties de moteur réducteur en vis-à-vis avec des rapports de réduction différents, ou une seule sortie double avec plusieurs vitesses possibles. La variante avec une seule sortie double peut être appliquée au cas mentionné précédemment d'une commande de réglage « glissière » d'un siège avant de véhicule automobile.

## Revendications

1. Dispositif de commande d'un équipement automobile réglable comprenant un système mécanique de transmission comprenant un arbre d'entrée (10 ; 30) par lequel la puissance motrice est amenée, un arbre de sortie (11 ; 51) auquel tout ou partie de la puissance motrice est transmise, et un mécanisme de transmission du mouvement entre l'arbre d'entrée (10 ; 30) et l'arbre de sortie (11 ; 51), **caractérisé en ce que** ledit mécanisme de transmission du mouvement est un mécanisme d'engrenage, qui présente plusieurs rapports de réduction possibles, de façon à obtenir des vitesses de rotation différentes (w₁, w₂ ; w'₁, w'₂) dudit arbre de sortie (11 ; 51), et **en ce qu'**il est prévu un moyen de commutation (20, 21 ; 40, 41) pour passer d'une desdites vitesses de rotation à une autre ;
**en ce que** ledit mécanisme de transmission du mouvement présente deux rapports de réduction possibles, de façon à obtenir deux vitesses de rotation différentes (w₁, w₂ ; w'₁, w'₂) dudit arbre de sortie (11 ; 51) ;
et **en ce que** ledit mécanisme d'engrenage est un mécanisme à double engrenage, chaque engrenage ayant un rapport de réduction différent et comprenant une roue (31, 32) montée sur l'arbre moteur (30) et une roue (33, 34) montée sur l'arbre de sortie (51).

2. Dispositif de commande selon la revendication 1, **caractérisé en ce que** l'équipement automobile est un siège ou la climatisation ou le coffre du véhicule ou les lave-glaces.

3. Dispositif de commande selon la revendication 1, **caractérisé en ce que** l'équipement automobile réglable est un siège réglable.

4. Dispositif de commande selon la revendication 3, **caractérisé en ce que** la commande d'un équipement automobile réglable est une commande de réglage glissière d'un siège avant de véhicule automobile.

5. Dispositif de commande selon l'une quelconque des revendications précédentes, **caractérisé en ce que** ledit moyen de commutation (20, 21 ; 40, 41) d'une desdites vitesses de rotation à une autre s'exerce sans déplacement d'engrenage.

6. Dispositif de commande selon la revendication 5, **caractérisé en ce que** ledit moyen de commutation (20, 21 ; 40, 41) est constitué par des embrayages électromagnétiques, en nombre égal au nombre de vitesses de rotation différentes.

7. Dispositif de commande selon l'une quelconque des revendications précédentes, **caractérisé en ce qu'**il est prévu deux embrayages (40, 41), chaque embrayage étant associé à un engrenage et ayant pour fonction d'établir ou défaire la transmission mécanique dudit engrenage avec l'arbre de sortie (51).

8. Dispositif de commande selon l'une quelconque des revendications précédentes 6 à 7, **caractérisé en ce que** l'activation simultanée des deux embrayages (20, 21 ; 40, 41) permet de bloquer la rotation de l'arbre de sortie (11 ; 51) de façon à réaliser un moyen de freinage du système.

9. Dispositif de commande selon l'une quelconque des revendications précédentes, **caractérisé en ce qu'**il comprend un moteur réducteur à au moins une sortie, qui comprend un axe d'entrée par lequel la puissance motrice est amenée, au moins un axe de sortie à laquelle une partie ou la totalité de la puissance motrice est disponible, au moins un embrayage électromagnétique destiné à établir ou à défaire, sur commande, la transmission d'une partie ou de la totalité de la puissance motrice vers une sortie, ladite sortie au moins étant une sortie à au moins deux vitesses de rotation différentes reliée à l'axe d'entrée par ledit système mécanique de transmission.

10. Dispositif de commande selon l'une quelconque des revendications précédentes, **caractérisé en ce que** l'arbre d'entrée et l'arbre de sortie sont parallèles mais ne sont pas coaxiaux.
